## Europäisches Patentamt
## European Patent Office
## Office européen des brevets

(19)

(11) **EP 1 226 456 B1**

(12)

# FASCICULE DE BREVET EUROPEEN

(45) Date de publication et mention
de la délivrance du brevet:
**26.07.2006 Bulletin 2006/30**

(21) Numéro de dépôt: **00971514.5**

(22) Date de dépôt: **26.10.2000**

(51) Int Cl.:
***G01V 1/28*** (2006.01)

(86) Numéro de dépôt international:
**PCT/FR2000/002984**

(87) Numéro de publication internationale:
**WO 2001/031364 (03.05.2001 Gazette 2001/18)**

(54) **PROCEDE DE PROSPECTION SISMIQUE METTANT EN OEUVRE UN TRAITEMENT SUR LES ONDES CONVERTIES**

SEISMISCHES PROSPEKTIONSVERFAHREN MIT VERARBEITUNG VON KONVERTIERTEN WELLEN

SEISMIC PROSPECTING METHOD USING CONVERTED WAVE PROCESSING

(84) Etats contractants désignés:
**FR GB IT NL**

(30) Priorité: **28.10.1999 FR 9913538**

(43) Date de publication de la demande:
**31.07.2002 Bulletin 2002/31**

(73) Titulaire: **COMPAGNIE GENERALE DE
GEOPHYSIQUE
F-91300 Massy (FR)**

(72) Inventeurs:
• **AUDEBERT, François
F-75007 Paris (FR)**
• **GRANGER, Pierre-Yves
F-91300 Massy (FR)**

(74) Mandataire: **Callon de Lamarck, Jean-Robert et al
Cabinet Régimbeau
20, rue de Chazelles
75847 Paris cedex 17 (FR)**

(56) Documents cités:
WO-A-99/54758          US-A- 4 881 209
US-A- 5 835 452

• GAISER J E: "Multicomponent V/sub p//V/sub s/
correlation analysis" GEOPHYSICS, JULY-AUG.
1996, SOC. EXPLORATION GEOPHYSICISTS,
USA, vol. 61, no. 4, pages 1137-1149,
XP002143571 ISSN: 0016-8033

**Description**

La présente invention est relative à un procédé de prospection sismique mettant en oeuvre un traitement sur les ondes converties.

Le principe général de la prospection sismique consiste à provoquer, à l'aide d'une source sismique, un ébranlement dans le sous-sol et à enregistrer, à l'aide de capteurs, des données sismiques générées par cet ébranlement pour en tirer une information sur la géologie du sous-sol et en particulier pour détecter la présence d'hydrocarbure.

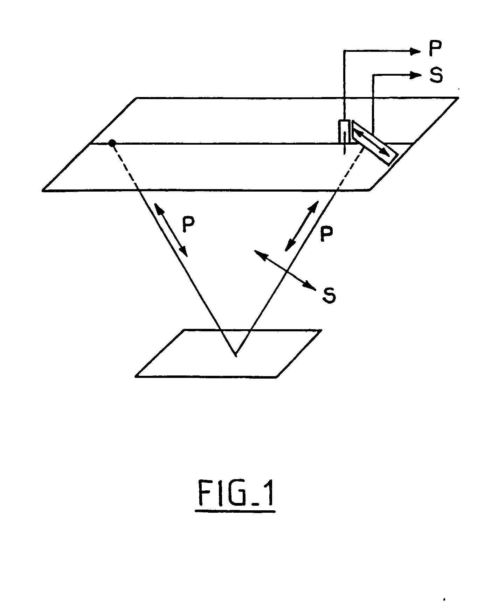

On a représenté sur la figure 1 une onde acoustique se propageant dans un sous-sol à partir d'une source 1. Cette onde acoustique est, dans l'exemple représenté, une onde de compression qui se réfléchit dans le sous-sol en se décomposant selon une onde réfléchie de compression et une onde réfléchie de cisaillement.

On rappelle que les ondes de compression (ondes dites de type P) vibrent dans leur direction de propagation, tandis que les ondes de cisaillement (ondes dites de type S) vibrent quant à elles perpendiculairement à cette direction de propagation. La vitesse de propagation des ondes de cisaillement est inférieure à la vitesse de propagation des ondes de compression et la connaissance des champs de vitesse des ondes de compression et des ondes de cisaillement permet de déterminer les informations sur le sous-sol. Par exemple, le rapport entre la vitesse des ondes de compression et la vitesse des ondes de cisaillement permet de déterminer le coefficient de pression des roches traversées et sert également d'indicateur de présence d'hydrocarbure.

Classiquement, pour inverser des données sismiques, on utilise des modélisations des champs de vitesses qui dépendent d'un certain nombre de paramètres - que l'on considère comme étant invariants pour une gamme de déports source/récepteur donnée et une zone spatiale d'acquisition donnée, ces paramètres pouvant néanmoins être "lentement" variables spatialement, c'est à dire être variables d'une zone spatiale à une autre.

Pour inverser des données sismiques correspondant à des réflexions SS ou PP dans le sous-sol, on utilise des paramètres Vp et Vs qui représentent des vitesses apparentes des ondes de compression et des ondes de cisaillement après correction dynamique ("Normal Move Out" ou "NMO" selon la terminologie anglo-saxonne généralement utilisée par l'homme du métier), ainsi que des paramètres Tp et Ts, qui représentent respectivement des temps de trajets verticaux des ondes P et S. Les paramètres Tp et Vp suffisent pour l'analyse des vitesses PP, tandis que les paramètres Ts et Vs suffisent pour l'analyse des vitesses SS.

L'analyse de vitesses converties (réflexions PS) se fait quant à elle généralement en utilisant, dans le domaine temporel, des modélisations faisant intervenir les paramètres Vp, Vs, ainsi qu'un paramètre Vc, où Vc est tel que :

$$Tc.Vc^2 = Tp.Vp^2 + Ts.Vs^2, \text{ avec } Tc = Ts + Tp.$$

Les modélisations utilisant ces trois paramètres sont performantes dans le cas de matériaux homogènes et isotropes pour les ondes S et P. Par contre dans le cas de milieux verticalement inhomogènes ou à forte anisotropie, il a été montré qu'il convenait de tenir compte de deux autres paramètres, désignés dans la littérature par $\gamma_{eff}$ et $\gamma_0$, où $\gamma_{eff} = \gamma_n^2/\gamma_0$ avec $\gamma_n = Vp/Vs$ et $\gamma_0 = Ts/Tp$.

Le déport xc du point de réflexion par rapport à une source dépend en effet au premier ordre du paramètre $\gamma_{eff}$ et au second ordre du paramètre $\gamma_0$, ainsi que de la quantité $Tc.Vc^2$.

On pourra à cet égard avantageusement se référer à la publication suivante :

- [1] Thomsen, L., 1998, "Converted-Wave reflection seismology over anisotropic, inhomogeneous media". 68th annual meeting, SEG Expanded Abstracts, 2048-2051.

Toutefois, dans cette publication, le paramètre $\gamma_{eff}$ est supposé connu. Or, dans la pratique, aucun des paramètres précités n'est habituellement immédiatement connu.

L'invention a quand à elle pour but de proposer un procédé de traitement sismique sur les ondes converties qui est particulièrement fiable et ce indépendamment de la connaissance préalable des paramètres $\gamma_{eff}$ et $\gamma_0$.

Récemment, il a été proposé de déterminer le déport latéral du point de conversion en utilisant la corrélation latérale entre d'une part des images à déport source/récepteur avant et d'autre part des images à déport source/récepteur arrière, c'est à dire des images obtenues en inversant les positions des sources et des récepteurs.

On pourra à cet égard se référer à :

- [1] Herrmann, P., Michaud, G., Granger P.Y., 1999, "Stacking mode-converted waves", presented at the CSEG conférence, Calgary, May 1999.

L'invention propose quant à elle un procédé de prospection sismique selon lequel on émet dans le sous-sol une onde sismique de compression et on recueille à l'aide de capteurs des données sismiques ayant au moins une composante de cisaillement et selon lequel on traite les données correspondant à cette composante de cisaillement pour en déduire une information sur la géologie du sous-sol, caractérisé en ce qu'on détermine une estimation du rapport

$$\int_{z_0}^{z} vp.dl \Big/ \int_{z_0}^{z} vs.dl \text{ , où vp et vs sont les valeurs de vitesses réelles locales de compression et de cisaillement,}$$

où 1 désigne la coordonnée de la profondeur dans le sous-sol, où z est la valeur de cette coordonnée de profondeur à la surface inférieure de la dernière couche à analyser et où $z_0$ est la valeur de cette coordonnée de profondeur à la surface supérieure de cette couche ou d'une couche au dessus de celle-ci,

et on inverse les données sismiques afin de déduire les valeurs de vitesses locales de compression et de cisaillement pour ladite couche à analyser, en utilisant une modélisation dans laquelle cette estimation est utilisée pour le paramètre invariant $\gamma_{eff}$.

L'invention est avantageusement complétée par les différentes caractéristiques suivantes prises seules ou selon toutes leurs combinaisons techniquement possibles :

- on détermine le paramètre $\gamma_{eff}$ en mettant en oeuvre, pour différentes valeurs possibles pour celui-ci, un traitement de migration des données sismiques qui correspondent à la composante de cisaillement, et en déterminant la valeur du paramètre $\gamma_{eff}$ pour laquelle les images sismiques avant et arrière sont les mieux corrélées ;
- pour faire varier le paramètre $\gamma_{eff}$, on pose

$$vp_\alpha = \alpha \; vp_0 \text{ et } vs_\beta = \beta \; vs_0,$$

où $vp_0$ et $vs_0$ sont les valeurs approximatives préalablement déterminées pour vp et vs, et on fait varier à la fois les variables $\alpha$ et $\beta$ ;

- la modélisation fait intervenir comme paramètres invariants au moins quatre des paramètres $\gamma_0$, $\gamma_{eff}$, Tp, Fp, Tc, Fc, avec $\gamma_0 = Ts/Tp$, $\gamma_{eff} = Fp/Fs$, Tc = Tp + Ts, où Tp et Ts représentent respectivement des temps de trajets verticaux des ondes de compression et de cisaillement, où Fp est tel que $(Fp/Tp)^{1/2}$ représente une vitesse de compression et où Fc est tel que $((Fc-Fp)/Ts)^{1/2}$ représente une vitesse de cisaillement.
- lorsque l'on fait varier les variables $\alpha$ et $\beta$, on remplace les paramètres $\gamma_0$, $\gamma_{eff}$, Tp, Fp, Fc par

$$\gamma_0{}' = \alpha/\beta \; * \; \gamma_0$$

$$\gamma_{eff}{}' = \alpha/\beta \; * \; \gamma_{eff}$$

$$Tp' = Tp \; * \; (1+\gamma_0)/(1+\gamma_0')$$

$$Fp' = Fp \; * \; \alpha^2 \; * \; (1+\gamma_0)/(1+\gamma_0')$$

$$Fc' = Fc \; * \; \alpha\beta \; * \; (1+\gamma_0)/(1+\gamma_0') \; * \; (1+\gamma_{eff}')/(1+\gamma_{eff})$$

et on met en oeuvre sur les données sismiques une migration correspondant à ces nouveaux paramètres ;
- pour faire varier le paramètre $\gamma_{eff}$, on pose $\beta = 1/\alpha$ et on fait varier $\alpha$ ;
- à l'issue de la détermination du paramètre $\gamma_{eff}$, on fait varier vp et vs tout en maintenant $\gamma_{eff}$ constant et on détermine le paramètre Fc pour lequel l'alignement selon la direction de déport est maximal ;
- pour faire varier vp et vs, on pose $vp_\alpha = \alpha \; vp_1$ et $vs_\alpha = \alpha \; vs_1$, où $vp_1$ et $vs_1$ sont des valeurs déterminées pour vp et vs dans l'étape 2, et on fait varier la variable $\alpha$ ;
- à l'issue de la détermination du paramètre Fc, on détermine le paramètre Tp et/ou le paramètre $\gamma_0 = Ts/Tp$ ;

- le paramètre Tp est avantageusement déterminé à partir du champ de vitesse vp déterminé à partir de l'analyse de la composante de compression des données sismiques ;
- on met ensuite en oeuvre un traitement de mise en profondeur commune des modèles de vitesses S et P ;
- à l'issue du traitement de mise en profondeur, on met en oeuvre un traitement à courbure à grand déport en faisant varier les paramètres d'anisotropie $\delta$ et $\sigma$ tout en maintenant constant le rapport $(1+2\delta)/(1+2\sigma)$.

D'autres caractéristiques et avantages de l'invention ressortiront encore de la description qui suit. Cette description est purement illustrative et non limitative. Elle doit être lue en regard des figures annexées sur lesquelles :

- la figure 1, déjà discutée, illustre schématiquement la décomposition en ondes S et P d'une onde de compression émise par une source acoustique ;
- la figure 2 illustre différentes étapes de traitement conformes à une mise en oeuvre possible pour l'invention ;
- les figures 3a et 3b illustrent l'influence du positionnement du point de conversion commun dans la détermination de $\gamma_{eff}$.

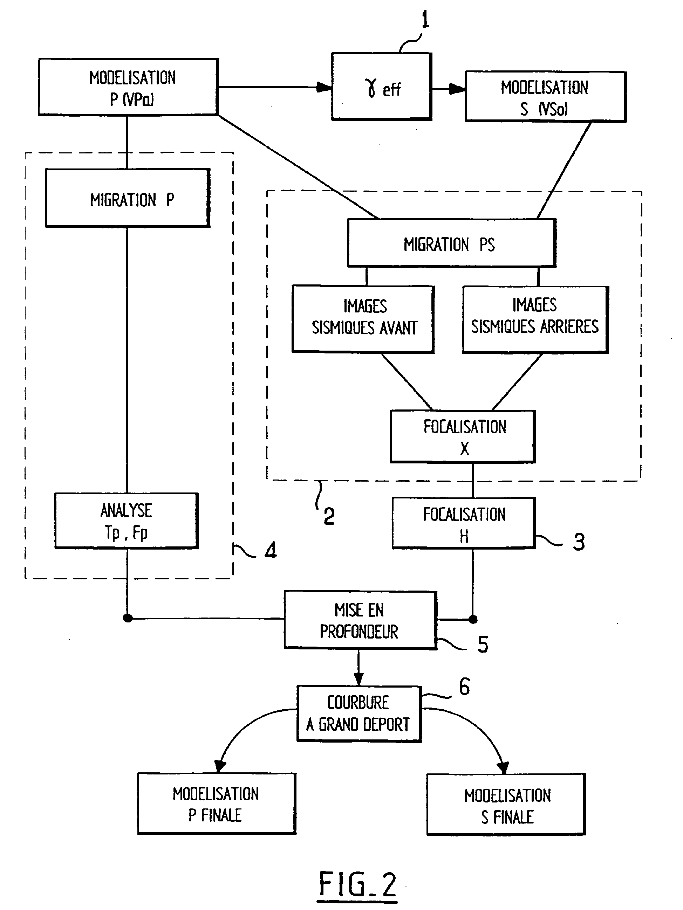

Le traitement qui est décrit ci-après en référence aux figures 2 et suivantes se met en oeuvre sur des images sismiques constituées par des traces sismiques correspondant les unes à des ondes de type PS, les autres à des ondes de type PP, acquises au moyen d'un ensemble dense de sources sismiques et de capteurs géophones ou hydrophones 2D ou 3D répartis selon au moins une direction d'acquisition.

Ce traitement comporte différentes étapes référencées de 1 à 6.

Dans une première étape (étape 1), on détermine des valeurs approchées pour les paramètres de modélisation des vitesses dans la couche d'analyse, en principe la première couche du sous-sol dont les vitesses sont à inverser, les vitesses des couches au dessus de cette couche d'analyse ayant quant à elles été préalablement inversées, par exemple au moyen du même traitement.

Notamment, on détermine une estimation du paramètre $\gamma_{eff}$.

A cet effet, on utilise par exemple les images sismiques temporelles correspondant à l'acquisition PP initiale pour déterminer une valeur d'initialisation pour le paramètre invariant Vp et on utilise les images sismiques temporelles correspondant à l'acquisition PS initiale pour déterminer une valeur d'initialisation pour le paramètre invariant Vs.

Dans un deuxième temps (étape 2), on met en oeuvre un traitement destiné à déterminer une valeur de $\gamma_{eff}$ plus précise.

A cet effet, on détermine une valeur de $\gamma_{eff}$ pour laquelle le décalage $\Delta X$, selon une direction spatiale d'acquisition, entre les images sismiques PS avant et les images sismiques PS arrière - lesquelles sont obtenues par inversion des positions des émetteurs et des sources le long de la direction d'acquisition considérée - est nul.

Plus précisément, les images sismiques avant sont obtenues en considérant un ensemble dense d'émetteurs alignés suivant l'azimut qui correspond à la direction d'acquisition et en relevant les traces sismiques obtenues pour les capteurs décalés par rapport aux émetteurs, dans la direction d'acquisition, d'un déport (algébrique) constant pré-défini. Les images arrière sont obtenues en utilisant les émetteurs directement voisins des capteurs utilisés pour l'acquisition des images sismiques avant, ainsi que des capteurs décalés par rapport à ces émetteurs, dans la direction d'acquisition, d'un déport (algébrique) inverse de celui utilisé pour l'acquisition des images avant.

Ce choix d'émetteurs et capteurs est extrait des données lors de la migration.

Les images avant et arrière ainsi déterminées sont ensuite utilisées pour déterminer la valeur correcte de $\gamma_{eff}$.

En effet, on a vu qu'il avait été montré que le déport xc du point de conversion par rapport à la source, dans la direction d'acquisition, dépend de $\gamma_{eff}$ au premier ordre et du paramètre $\gamma_0$, ainsi que de la quantité $Tc.Vc^2$ au second ordre.

Or, la détermination de cette quantité $Tc\,V_C^2$ souffre d'un étalement du point de conversion qui dépend de l'erreur sur $\gamma_{eff}$, mais cet étalement intervient toujours en sens opposé dans le cas où l'on inverse un couple émetteur/récepteur donné.

La cohérence latérale, c'est à dire le déport $\Delta X$ entre image avant et arrière est donc nulle lorsque la valeur de $\gamma_{eff}$ est correcte.

Ainsi, la condition $\Delta X = 0$ est équivalente à une détermination exacte de $\gamma_{eff}$ ou à une détermination exacte du déport Xc du point de conversion (détermination dite de la configuration à point de conversion commun ou PCC).

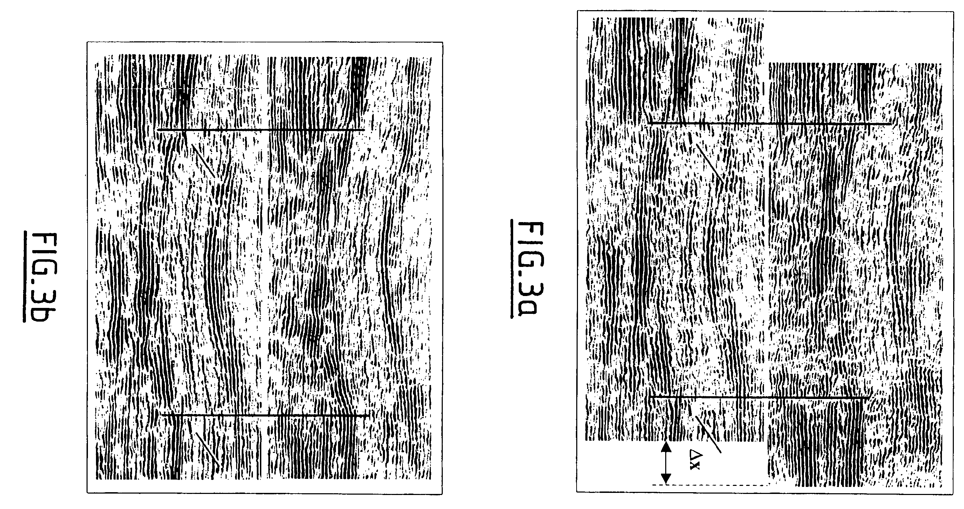

C'est ce qui est illustré sur les figures 3a et 3b. La figure 3a représente l'une en dessous de l'autre les images sismiques migrées avant et arrière obtenues pour $\gamma_{eff}$ quelconque. L'image avant ne correspond à l'image arrière qu'avec un décalage $\Delta X$. La figure 3b représente quant à elle l'une en dessous de l'autre les images sismiques avant et arrière obtenues après détermination de la valeur de $\gamma_{eff}$, c'est à dire après mise en configuration à point de conversion commun. Il n'y a alors pas de décalage entre les images avant et arrière.

Le procédé met donc en oeuvre un traitement permettant de déterminer la valeur de $\gamma_{eff}$ pour laquelle le décalage $\Delta X$ est nul.

Cette détermination de la valeur de $\gamma_{eff}$ pour laquelle le décalage $\Delta X$ est nul se fait par exemple en posant

$$vp_\alpha = \alpha\ vp_0\ et\ vs_\beta = \beta\ vs_0,$$

où $vp_0$ et $vs_0$ sont les valeurs approximatives de vitesses réelles locales de compression et de cisaillement déterminées au moyen de migrations mises en oeuvre sur les acquisitions PP et PS initiales et où $\alpha$ et $\beta$ sont des variables.

On peut par exemple utiliser pour $vp_0$ et $vs_0$ des valeurs globales correspondant à une estimation d'une vitesse moyenne à travers toutes les couches, y compris la couche analysée. On peut montrer qu'il est possible d'utiliser, au lieu des invariants classiques Vp, Vs, Tp, Ts, Vc, $\gamma_{eff}$ et $\gamma_0$, les invariants Tp, Fp, Ts, Fs, ou encore Tp, Fp, Tc, Fc, où Fp, Fs et Fc vérifient

$$Fp = Tp.Vp^2$$

$$Fs = Ts.Vs^2$$

$$Fc = Tc.Vc^2$$

Ces invariants sont en effet mathématiquement équivalents aux invariants classiques Vp, Vs, Tp, Ts, Vc, $\gamma_{eff}$ et $\gamma_0$. Ils ont l'avantage d'être facilement calculable à partir d'un champ de valeurs vp, vs, puisque l'on a :

$$Tp = \int_{Z_0}^{Z} dl\Big/vp$$

$$Fp = \int_{Z_0}^{Z} vp.dl$$

$$Ts = \int_{Z_0}^{Z} dl\Big/vs \quad .$$

$$Fs = \int_{Z_0}^{Z} vs.dl$$

et

$$\gamma_{eff} = Fp/Fs$$

où vp et vs sont les valeurs de vitesses réelles locales de compression et de cisaillement, où 1 désigne la coordonnée de la profondeur dans le sous-sol, où z est la valeur de cette coordonnée de profondeur à la surface inférieure de la dernière couche à analyser et où $z_0$ est la valeur de cette coordonnée de profondeur à la surface supérieure de cette couche ou d'une couche au dessus de celle-ci,

Par ailleurs :

Tp, Fp, Ts, Fs constituent les quatre paramètres indépendants fondamentaux dont tous les autres se déduisent.

$$\gamma_{eff} = Fp/Fs,$$

$$\gamma_0 = Ts/Tp,$$

$$Fc = Fp + Fs,$$

$$Tc = Tp + Ts,$$

$$Vp = \sqrt{(Fp/Tp)}$$

$$Vs = \sqrt{(Fs/Ts)}$$

$$Vc = \sqrt{(Fc/Tc)}$$

etc.

Il en résulte que les combinaisons quatre par quatre suivantes sont suffisantes pour déterminer complètement le problème.
(Tp, Fp, Ts, Fs)
(Tp, Fp, Tc, Fc)
(Fc, Tc, $\gamma_0$ $\gamma_{eff}$)
(ce sont les plus utiles),
et encore :
(Tp, Vp, Ts, Vs)
(Tp, Vp, Tc, Vc)
etc.
Pour chaque couple $(\alpha, \beta)$, on remplace les paramètres $\gamma_0$, $\gamma_{eff}$, Tp, Fp, Fc par

$$\gamma_0{}' = \alpha/\beta * \gamma_0$$

$$\gamma_{eff}{}' = \alpha/\beta * \gamma_{eff}$$

$$Tp' = Tp * (1+\gamma_0)/(1+\gamma_0')$$

$$Fp' = Fp * \alpha^2 * (1+\gamma_0)/(1+\gamma_0')$$

$$Fc' = Fc * \alpha\beta * (1+\gamma_0)/(1+\gamma_0') * (1+\gamma_{eff}')/(1+\gamma_{eff})$$

et on met en oeuvre sur les données sismiques une migration PS correspondant à ces nouveaux paramètres.

Après migration des données sismiques, on calcule la corrélation entre les images sismiques avant et les images sismiques arrière.

On choisit le couple ($\alpha$, $\beta$) pour lequel cette corrélation est la plus importante.

Ce traitement est avantageusement mis en oeuvre en utilisant $\beta = 1/\alpha$, ce qui permet de n'avoir à faire varier que la variable $\alpha$ (contre factorisation de vs et vp).

Une fois $\gamma_{eff}$ ainsi déterminé, on met en oeuvre dans une nouvelle étape (étape 3 - focalisation H, la lettre H désignant en effet classiquement le déport source-récepteur) un traitement destiné à permettre de raffiner la valeur du paramètre Fc.

A cet effet, on fait varier vp et vs tout en maintenant $\gamma_{eff}$ constant.

Par exemple, on pose $vp_\alpha = \alpha\, vp_1$ et $vs_\alpha = \alpha\, vs_1$, où $vp_1$ et $vs_1$ sont les valeurs déterminées pour vp et vs dans l'étape 2, et où $\alpha$ est une variable que l'on fait varier (co factorisation de Vp et Vs).

On détermine les nouveaux paramètres $\gamma_0$', $\gamma_{eff}$', Tp', Fp', Fc' correspondant à ces vitesses $vp_\alpha$ et $vs_\alpha$ (en remplaçant $\beta$ par $\alpha$ dans la formulation donnée ci-dessus pour ces paramètres) et on met en oeuvre un traitement de migration en utilisant une modélisation qui correspond à ces paramètres. La migration produit cette fois-ci des collections à point de conversion (candidat) commun. Au lieu de regarder une image pour un déport avant et une image pour un déport arrière sur toute une ligne image, on regarde cette fois-ci en un ensemble de positions spatiales discrètes (position PCC ou Point de Conversion Commun) alignées selon la direction de déport considérée.

La valeur retenue pour Fc est celle qui correspond à la valeur de $\alpha$ pour laquelle l'alignement selon la direction de déport est optimale. L'analyse se fait sur autant de positions CCP que souhaité.

$\gamma_{eff}$ et Fc ayant ainsi été déterminés à l'issue de cette troisième étape, il en va de même pour Fs et Fp.

Il reste néanmoins à déterminer Tp et $\gamma_0$, qui dépendent l'un de l'autre.

$\gamma_0$ commande la condition de mise en profondeur commune des images PP (mais ne suffit pas à l'assurer sauf dans l'hypothèse incertaine d'une parfaite isotropie pour les ondes P et S). A contrario, une mesure indépendante de $\gamma_0$, contrainte par la condition de mise en profondeur commune PP et PS donne un accès à l'anisotropie du milieu.

Tp est avantageusement déterminé, dans une étape 4, à partir du champ de vitesse vp déterminé à partir de l'analyse des ondes PP. On notera que la détermination de Tp n'est pas indispensable à la détermination des paramètres Fp et Fs qui ont été déterminés de façon cohérente grâce au traitement de l'étape 2 sur les ondes PS.

On dispose ainsi à l'issue de cette étape 4 de tous les paramètres de modélisation PS et PP : Tp, Fp, Ts, et Fs sont connus.

Dans une étape 5, on met en oeuvre un traitement de mise en profondeur commune des modèles de vitesses S et P. En effet, les déterminations des paramètres Tp, Fp, Ts et Fs faites dans les étapes précédentes ont été faites sur la dernière couche et ne préjugeaient pas de l'existence d'une éventuelle anisotropie. Toutefois, la détermination de ces paramètres invariants a une profondeur commune aux modèles P et S nécessite de prendre en compte l'anisotropie (en effet les invariants T et F font intervenir des vitesses locales différentes en cas d'anisotropie).

On utilise à cet effet un traitement se fondant sur un modélisation de l'isotropie transverse verticale ("VTI" ou "Vertical axis Transverse Isotropy" selon la terminologie anglo-saxonne utilisée par l'homme du métier) du type de celle proposée par Thomsen dans :

[3] - Weak elastic anisotropy ; Geophysics, 51, 1954-1966 - Thomsen, 1986.

et utilisant notamment les paramètres d'anisotropie $\delta$ et $\sigma$ introduits par Thomsen dans sa publication précitée.

(On rappelle que ces paramètres d'anisotropie vérifient en particulier :

$$V_{nmop} = V_{p0} \sqrt{1 + 2\delta} \ \text{ et } \ V_{nmos} = V_{s0} \sqrt{1 + 2\sigma}$$

où $V_{nmop}$ et $V_{nmos}$ sont les vitesses NMO apparentes de compression et de cisaillement et où $V_{p0}$ et $V_{s0}$ sont les vitesses verticales).

La vraie profondeur Zr est commune aux vrais modèles de vitesses P et S, et est reliée à Fp, Tp dans le premier modèle , et a Fs, Ts dans le second, par les deux paramètres d'anisotropie $\delta$ et $\sigma$ indépendants entre eux.

Or, ces paramètres $\delta$ et $\sigma$ sont contraints, en termes de valeurs moyennes apparentes, par la relation

$$\gamma_{eff}/\gamma_0 = (1+2\delta)/(1+2\sigma).$$

De plus , les paramètres invariants Tp, Fp, Ts et Fs étant des intégrales sur la profondeur, ils se prêtent naturellement a une analyse couche par couche ("effeuillage" ou « layer stripping »), le problème se ramenant à une détermination locale des invariants au toit de la dernière couche.

On va alors déterminer 5 inconnues locales, ($v_p$, $v_s$, Z, $\delta$, $\sigma$) - c'est à dire les vitesses correspondant à la propagation en mode P et à la propagation en mode S, la profondeur commune de la base de la couche, et les deux paramètres d'anisotropie - avec quatre mesures, Tp, Ts, Fp, et Fs. Une détermination complète requiert soit de l'information à grand déport, soit de l'information de puits pour contraindre Z ou $\delta$.

Par exemple, on impose $\delta = 0$.

La focalisation et le calage des images PP et PS revient alors à résoudre le système d'équations suivant pour en trouver les solutions Z, $V_p$, $v_s$, $\sigma$

$$Tp = \int_{Z_0}^{Z} \frac{dl}{Vp}$$

$$Fp = \int_{Z_0}^{Z} Vp.\sqrt{1+2\delta}.dl$$

$$Ts = \int_{Z_0}^{Z} \frac{dl}{Vs}$$

$$Fs = \int_{Z_0}^{Z} Vs.\sqrt{1+2\sigma}.dl$$

Dans une dernière étape (étape 6), on met en oeuvre un traitement de courbure à grand déport. La résolution de l'analyse de vitesse des ondes P et S en milieu anisotrope, par des approximations isotropes et court déport n'a plus laissé qu'un seul degré de liberté au problème: le comportement a grand déport ou l'anisotropie se manifeste le plus clairement. Le comportement des temps de trajet à grand déport est sondé par migration avant addition en faisant varier les paramètres d'anisotropie tout en maintenant constant le rapport $(1+2\delta)/(1+2\sigma)$.

## Revendications

**1.** Procédé de prospection sismique selon lequel on émet dans le sous-sol une onde sismique de compression et on recueille à l'aide de capteurs des données sismiques ayant au moins une composante de cisaillement et selon lequel on traite les données correspondant à cette composante de cisaillement pour en déduire une information sur la géologie du sous-sol, **caractérisé en ce qu'**on détermine une estimation du rapport $\int_{Z_0}^{Z} vp.dl \Big/ \int_{Z_0}^{Z} vs.dl$ , où

vp et vs sont les valeurs de vitesses réelles locales de compression et de cisaillement, où I désigne la coordonnée de la profondeur dans le sous-sol, où z est la valeur de cette coordonnée de profondeur à la surface inférieure de la dernière couche à analyser et où $z_0$ est la valeur de cette coordonnée de profondeur à la surface supérieure de cette couche ou d'une couche au dessus de celle-ci, et on inverse les données sismiques afin de déduire les valeurs de vitesses locales de compression et de cisaillement pour ladite couche à analyser, en utilisant une modélisation de champ de vitesses de compression et cisaillement utilisant un paramètre invariant $\gamma_{eff}$, le paramètre $\gamma_{eff}$ étant

défini par le rapport $\dfrac{V_p^2 T_p}{V_s^2 T_s}$ , $V_p$ et $V_s$ étant respectivement les vitesses apparentes des ondes de compression et de cisaillement, et $T_p$ et $T_s$ étant respectivement les temps de trajets verticaux des ondes de compression et cisaillement, modélisation dans laquelle cette estimation est utilisée pour le paramètre $\gamma_{eff}$.

**2.** Procédé selon la revendication 1, **caractérisé en ce qu'**on détermine le paramètre $\gamma_{eff}$ en mettant en oeuvre, pour différentes valeurs possibles pour celui-ci, un traitement de migration des données sismiques qui correspondent à la composante de cisaillement, et en déterminant la valeur du paramètre $\gamma_{eff}$ pour laquelle les images sismiques avant et arrière sont les mieux corrélées.

3. Procédé selon la revendication 2, **caractérisé en ce que** pour faire varier le paramètre $\gamma_{eff}$, on pose

$$vp_\alpha = \alpha \, vp_0 \text{ et } vs_\beta = \beta \, vs_0,$$

où $vp_0$ et $vs_0$ sont les valeurs approximatives préalablement déterminées pour vp et vs, et on fait varier à la fois les variables $\alpha$ et $\beta$.

4. Procédé selon l'une des revendications 1 à 3, **caractérisé en ce que** la modélisatio* fait intervenir comme paramètres invariants au moins quatre des paramètres $\gamma_0$, $\gamma_{eff}$, Tp, Fp, Tc, Fc, avec $\gamma_0 = Ts/Tp$, $\gamma_{eff} = Fp/Fs$, Tc = Tp + Ts où Tp et Ts représentent respectivement des temps de trajets verticaux des ondes de compression et de cisaillement, où Fp est tel que $(Fp/Tp)^{1/2}$ représente une vitesse de compression et où Fs et Fc sont tels que $\left(\frac{Fs}{Ts}\right)^{1/2}$ et ((Fc-Fp)

$/Ts)^{1/2}$ représentent une vitesse de cisaillement.

5. Procédé selon les revendications 3 et 4 prises en combinaison, **caractérisé en ce que**, lorsque l'on fait varier les variables $\alpha$ et $\beta$, on remplace les paramètres $\gamma_0$, $\gamma_{eff}$, Tp, Fp, Fc par

$$\gamma_0' = \alpha/\beta \, * \, \gamma_0$$

$$\gamma_{eff}' = \alpha/\beta \, * \, \gamma_{eff}$$

$$Tp' = Tp \, * \, (1+\gamma_0)/(1+\gamma_0')$$

$$Fp' = Fp \, * \, \alpha^2 \, * \, (1+\gamma_0)/(1+\gamma_0')$$

$$Fc' = Fc \, * \, \alpha\beta \, * \, (1+\gamma_0)/(1+\gamma_0') \, * \, (1+\gamma_{eff}')/(1+\gamma_{eff})$$

et on met en oeuvre sur les données sismiques une migration correspondant à ces nouveaux paramètres.

6. Procédé selon la revendication 5, **caractérisé en ce que** pour faire varier le paramètre $\gamma_{eff}$, on pose $\beta = 1/\alpha$ et on fait varier $\alpha$.

7. Procédé selon l'une des revendications précédentes, **caractérisé en ce qu'**à l'issue de la détermination du paramètre $\gamma_{eff}$, on fait varier vp et vs tout en maintenant $\gamma_{eff}$ constant et on détermine le paramètre Fc pour lequel l'alignement selon la direction de déport est maximal.

8. Procédé selon la revendication 7, **caractérisé en ce** pour faire varier vp et vs, on pose $vp_\alpha = \alpha \, vp_1$ et $vs_\alpha = \alpha \, vs_1$, où $vp_1$ et $vs_1$ sont des valeurs déterminées pour vp et vs, suite à la migration et on fait varier la variable $\alpha$.

9. Procédé selon l'une des revendications 7 ou 8, **caractérisé en ce qu'**à l'issue de la détermination du paramètre Fc, on détermine le paramètre Tp et/ou le paramètre $\gamma_0 = Ts/Tp$.

10. Procédé selon la revendication 9, **caractérisé en ce que** le paramètre Tp est avantageusement déterminé à partir du champ de vitesse vp déterminé à partir de l'analyse de la composante de compression des données sismiques.

11. Procédé selon l'une des revendications 9 et 10, **caractérisé en ce qu'**on met ensuite en oeuvre un traitement de mise en profondeur commune des modèles de vitesses S et P.

**12.** Procédé selon la revendication 11, **caractérisé en ce qu'**à l'issue du traitement de mise en profondeur, on met en oeuvre un traitement à courbure à grand déport, dans lequel le comportement sur temps de trajet à grand départ est sondé par migration avant addition en faisant varier les paramètres d'anisotropie $\delta$ et $\sigma$ tout en maintenant constant le rapport $(1+2\delta)/(1+2\sigma)$.

**Claims**

**1.** A seismic prospection method in which a compression seismic wave is emitted into the subsoil and sensors are used to collect seismic data having at least a shear component, and in which the data corresponding to said shear component is processed to deduce information about the geology of the subsoil, the method being **characterized in that** an estimate of the ratio:

$$\int_{Z_0}^{Z} v_p.dl / \int_{Z_0}^{Z} v_s.dl$$

is determined where $v_p$ and $v_s$ are values for actual local compression and shear speeds, where l is the depth coordinate in the subsoil, where Z is the value of this depth coordinate at the bottom surface of the last layer to be analyzed and where $Z_0$ is the value of this depth coordinate at the top surface of said layer or of a layer above it, and the seismic data is inverted in order to deduce the local values of compression and shear speed for said layer to be analyzed, by using a model of the compression and shear speed fields using an invariant parameter $\gamma_{eff}$ defined by the ratio $\dfrac{V_p^{\,2}\;T_p}{V_s^{\,2}\;T_s}$, where $V_p$ and $V_s$ are the apparent speeds of the compression and shear waves respectively, and $T_p$ and $T_s$ are the vertical travel times of the compression and shear waves respectively, in which model this estimate is used for the parameter $\gamma_{eff}$.

**2.** A method according to claim 1, **characterized in that** the parameter $\gamma_{eff}$ is determined for various different possible values thereof by applying migration processing to the seismic data that corresponds to the shear component, and by determining the value for the parameter $\gamma_{eff}$ at which the forward and backward seismic images are best correlated.

**3.** A method according to claim 2, **characterized in that** to vary the parameter $\gamma_{eff}$, the following notation is used:

$$v_{p\alpha} = \alpha v_{p0} \text{ and } v_{s\beta} = \beta v_{s0}$$

where $v_{p0}$ and $v_{s0}$ are previously determined approximate values for $v_p$ and $v_s$, and both of the variables $\alpha$ and $\beta$ are varied.

**4.** A method according to any one of claims 1 to 3, **characterized in that** the model uses as invariant parameters at least four of the following parameters: $\gamma_0$, $\gamma_{eff}$, $T_p$, $F_p$, $T_c$, and $F_c$ where $\gamma_0 = T_s/T_p$, $\gamma_{eff} = F_p/F_s$, $T_c = T_p + T_s$, and where $T_p$ and $T_s$ represent the vertical travel times for the compression and shear waves respectively, where $F_p$ is such that $(F_p/T_p)^{1/2}$ represents a compression speed, and where $F_s$ and $F_c$ are such that $(F_s/T_s)^{1/2}$ and $((F_c-F_p)/T_s)^{1/2}$ represent a shear speed respectively.

**5.** A method according to claims 3 and 4 taken in combination, **characterized in that** when the variables $\alpha$ and $\beta$ are varied, the parameters $\gamma_0$, $\gamma_{eff}$, $T_p$, $F_p$, and $F_c$ are replaced as follows:

$$\gamma_0' = \alpha/\beta * \gamma_0$$

$$\gamma_{eff}' = \alpha/\beta * \gamma_{eff}$$

$$T_p' = T_p * (1+\gamma_0)/(1+\gamma_0')$$

$$F_p' = F_p * \alpha^2 * (1+\gamma_0)/(1+ \gamma_0')$$

$$F_c' = F_c * \alpha\beta * (1+\gamma_0)/(1+\gamma_0') * (1+\gamma_{eff}')/(1+\gamma_{eff})$$

and migration is applied to the seismic data corresponding to these new parameters.

6. A method according to claim 5, **characterized in that** to vary the parameter $\gamma_{eff}$, $\beta$ is set equal to $1/\alpha$, and $\alpha$ is varied.

7. A method according to anyone of the preceding claims, **characterized in that** after the parameter $\gamma_{eff}$ has been determined, $v_p$ and $v_s$ are varied while keeping $\gamma_{eff}$ constant, and the parameter $F_c$ is determined for which the alignment in the offset axis is at a maximum.

8. A method according to claim 7, **characterized in that** to vary $v_p$ and $v_s$, the following notation is used:

$$v_{p\alpha} = \alpha v_{p1} \text{ and } v_{s\alpha} = \alpha v_{s1}$$

where $v_{p1}$ and $v_{s1}$ are values determined for $v_p$ and $v_s$ following the migration, and the variable $\alpha$ is varied.

9. A method according to claim 7 or 8, **characterized in that** after determining the parameter $F_c$, the parameter $T_p$ and/or the parameter $\gamma_0 = T_s/T_p$ is/are determined.

10. A method according to claim 9, **characterized in that** the parameter $T_p$ is advantageously determined from the $v_p$ speed field determined by analyzing the compression component of the seismic data.

11. A method according to claim 9 or 10, **characterized in that** processing is subsequently performed to bring the S-speed and P-speed models to a common depth.

12. A method according to claim 11, **characterized in that** after processing to bring to a common depth, large-offset curvature processing is implemented, in which the behavior over large-offset travel time is probed by migration before addition by varying the anisotropy parameters $\delta$ and $\sigma$ while keeping the following ratio constant:

$$(1 + 2\delta)/(1 + 2\sigma)$$

**Patentansprüche**

1. Verfahren zur seismischen Prospektion, gemäß welchem im Untergrund eine seismische Kompressionswelle ausgesendet wird und mit Hilfe von Sensoren seismische Daten gesammelt werden, die mindestens eine Scherkomponente aufweisen, und gemäß welchem die dieser Scherkomponente entsprechenden Daten verarbeitet werden, um daraus eine Information über die Geologie des Untergrundes abzuleiten, **dadurch gekennzeichnet, dass** eine Schätzung des Verhältnisses $\int_{z_0}^{z} v_p.dl / \int_{z_0}^{z} v_s.dl$ ermittelt wird, wobei vp und vs die Werte der effektiven lokalen Kompressions- und Schergeschwindigkeiten sind, I die Koordinate für die Tiefe im Untergrund bezeichnet, z der Wert dieser Tiefenkoordinate an der Unterseite der letzten zu analysierenden Schicht ist und $z_0$ der Wert

dieser Tiefenkoordinate an der Oberseite dieser Schicht oder einer Schicht oberhalb von jener ist, und die seismischen Daten invertiert werden, um die Werte der lokalen Kompressions- und Schergeschwindigkeiten für die zu analysierende Schicht abzuleiten, unter Verwendung eines Modells eines Kompressions- und Schergeschwindigkeitsfeldes, das einen invarianten Parameter $\gamma_{eff}$ verwendet, wobei der Parameter $\gamma_{eff}$ durch das Verhältnis

$$\frac{V_p^2 \, T_p}{V_s^2 \, T_s}$$ definiert ist, wobei $V_p$ und $V_s$ die scheinbaren Geschwindigkeiten der Kompressions- bzw. Scherwellen

und $T_p$ und $T_s$ die vertikalen Laufzeiten der Kompressions- bzw. Scherwellen sind, und wobei diese Schätzung für den Parameter $\gamma_{eff}$ in dem Modell verwendet wird.

2. Verfahren nach Anspruch 1, **dadurch gekennzeichnet, dass** man den Parameter $\gamma_{eff}$ bestimmt, indem man für unterschiedliche mögliche Werte für diesen eine Migrationsbehandlung der seismischen Daten ausführt, welche der Scherkomponente entsprechen, und indem man den Wert des Parameters $\gamma_{eff}$ bestimmt, für welchen die vorderen und hinteren seismischen Bilder am besten korrelieren.

3. Verfahren nach Anspruch 2, **dadurch gekennzeichnet, dass** man, um den Parameter $\gamma_{eff}$ zu variieren

$$vp_\alpha = \alpha \, vp_0 \quad und \quad vs_\beta = \beta \, vs_0$$

setzt, wobei $vp_0$ und $vs_0$ die zuvor für vp und vs bestimmten Näherungswerte sind, und man die Variablen $\alpha$ und $\beta$ zugleich variiert.

4. Verfahren nach einem der Ansprüche 1 bis 3, **dadurch gekennzeichnet, dass** das Modell wenigstens vier der Parameter $\gamma_0$, $\gamma_{eff}$, Tp, Fp, Tc, Fc als invariante Parameter einbezieht, mit $\gamma_0$ = Ts/Tp, $\gamma_{eff}$ = Fp/Fs, Tc = Tp + Ts, wobei Tp und Ts für vertikale Laufzeiten der Kompressions- bzw. Scherwellen stehen, wobei Fp so ausgelegt ist, dass $(Fp/Tp)^{1/2}$ für eine Kompressionsgeschwindigkeit steht und worin Fs und Fc so ausgelegt sind, dass $(Fs/Ts)^{1/2}$ und $((Fc-Fp)/Ts)^{1/2}$ für eine Schergeschwindigkeit stehen.

5. Verfahren nach Anspruch 4 in seinem Rückbezug auf Anspruch 3, **dadurch gekennzeichnet, dass**, wenn die Variablen $\alpha$ und $\beta$ variiert werden, die Parameter $\gamma_0$, $\gamma_{eff}$, Tp, Fp, Fc ersetzt werden durch

$$\gamma_0' = \alpha/\beta \ast \gamma_0$$

$$\gamma_{eff}' = \alpha/\beta \ast \gamma_{eff}$$

$$T_p' = T_p \ast (1+\gamma_0)/(1+\gamma_0')$$

$$F_p' = F_p \ast \alpha^2 \ast (1+\gamma_0)/(1+\gamma_0')$$

$$F_c' = F_c \ast \alpha\beta \ast (1+\gamma_0)/(1+\gamma_0') \ast (1+\gamma_{eff}')/(1+\gamma_{eff})$$

und auf die seismischen Daten eine Migration angewandt wird, welche diesen neuen Parametern entspricht.

6. Verfahren nach Anspruch 5, **dadurch gekennzeichnet, dass** man, um den Parameter $\gamma_{eff}$ zu variieren, $\beta = 1/\alpha$ setzt und $\alpha$ variiert.

7. Verfahren nach einem der vorangegangenen Ansprüche, **dadurch gekennzeichnet, dass** nach der Bestimmung

des Parameters $\gamma_{eff}$, vp und vs variiert werden, wobei $\gamma_{eff}$ konstant gehalten wird, und der Parameter Fc bestimmt wird, für welchen die Ausrichtung in der Verschiebungsrichtung maximal ist.

8. Verfahren nach Anspruch 7, **dadurch gekennzeichnet, dass** man, um vp und vs zu variieren, $vp_{\alpha} = \alpha\, vp_1$ und $vs_{\alpha} = \alpha\, vs_1$ setzt, wobei $vp_1$ und $vs_1$ Werte sind, die nach der Migration für vp und vs bestimmt wurden, und man die Variable $\alpha$ variiert.

9. Verfahren nach einem der Ansprüche 7 oder 8, **dadurch gekennzeichnet, dass** nach der Bestimmung des Parameters Fc der Parameter Tp und/oder der Parameter $\gamma_0 = Ts/Tp$ bestimmt wird.

10. Verfahren nach Anspruch 9, **dadurch gekennzeichnet, dass** der Parameter Tp vorteilhafterweise ausgehend von dem Geschwindigkeitsfeld vp bestimmt wird, welches ausgehend von der Analyse der Kompressionskomponente der seismischen Daten bestimmt wird.

11. Verfahren nach einem der Ansprüche 9 oder 10, **dadurch gekennzeichnet, dass** dann eine Bearbeitung durchgeführt wird, um die Geschwindigkeitsmodelle S und P auf eine gemeinsame Tiefe zu bringen.

12. Verfahren nach Anspruch 11, **dadurch gekennzeichnet, dass** am Ende der Bearbeitung zum Erhalt einer gemeinsamen Tiefe eine Krümmungsbearbeitung mit großer Verschiebung ausgeführt wird, in welcher das Verhalten der Laufzeiten mit großer Verschiebung durch Migration vor Summierung sondiert wird, indem die Anisotropieparameter $\delta$ und $\sigma$ unter Konstanthaltung des Verhältnisses $(1+2\delta)/(1+2\sigma)$ variiert werden.

FIG_1

FIG.2

FIG.3a

FIG.3b